# EUROPÄISCHE PATENTSCHRIFT

(11) **EP 3 797 182 B1**
(45) Veröffentlichungstag und Bekanntmachung des Hinweises auf die Patenterteilung: **11.10.2023**
(21) Anmeldenummer: 19745977.9
(22) Anmeldetag: 08.07.2019
(51) Int. Cl.: C25B 9/70, C25B 15/08, C25B 1/04, C25B 9/05

(54) **ELEKTROLYSEEINHEIT UND VERFAHREN ZUM BETREIBEN DER ELEKTROLYSEEINHEIT**
ELECTROLYSIS UNIT AND METHOD FOR OPERATING THE SAME
UNITÉ D'ÉLECTROLYSE ET PROCÉDÉ DE FONCTIONNEMENT DE L'UNITÉ D'ÉLECTROLYSE

(30) Priorität: 27.07.2018 EP 18186039
(43) Veröffentlichungstag der Anmeldung: 31.03.2021
(73) Patentinhaber: Siemens Energy Global GmbH & Co. KG, 81739 München (DE)
(72) Erfinder: PURUCKER, Thomas, 91093 Hessdorf (DE); RÜCKERT, Stephan, 91058 Erlangen (DE); STRAUB, Jochen, 91054 Erlangen (DE); UTZ, Peter, 90419 Nürnberg (DE)
(86) Internationale Anmeldenummer: PCT/EP2019/068209
(87) Internationale Veröffentlichungsnummer: WO 2020/020611

(56) Entgegenhaltungen:
- DE-A1- 10 258 525
- US-A1- 2016 060 776
- DATABASE WPI Week 199848 Thomson Scientific, London, GB; AN 1998-563666 XP002788255, & JP H10 251884 A (SHINKO PANTEC CO LTD) 22. September 1998 (1998-09-22) -& JP 3 366549 B2 (SHINKO PANTEC CO LTD) 14. Januar 2003 (2003-01-14)

## Beschreibung

Die Erfindung betrifft eine Elektrolyseeinheit mit wenigstens einer Elektrolysezelle und ein Verfahren zum Betreiben der Elektrolysezelle.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, mit überschüssiger Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle. Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert.

Das Wasser sollte dabei konstant in den Anodenraum und/oder Kathodenraum gefördert werden, um eine gleichmäßige Verteilung des Wassers in diesen Räumen zu gewährleisten und damit auch eine effektive elektrolytische Spaltung des Wassers. Das Fördern erfolgt typischerweise mit Pumpen. Alternativ oder zusätzlich kann die Verteilung des Wassers in den Räumen auch mittels Naturumlauf erfolgen. Bei dem Prinzip des Naturumlaufs sind der Elektrolyseur und die Gasabscheider auf unterschiedlichen Höhenniveaus angeordnet. Die Gasabscheider liegen dabei oberhalb des Elektrolyseurs. Das flüssige Wasser wird dabei unten in den Elektrolyseur hinzugefügt und anschließend in dem Elektrolyseur zu den Produktgasen zerlegt. Das aufsteigende Produktgas steigt aufgrund der Dichteunterschiede in die Gasabscheider auf, wo nicht umgesetztes Wasser von dem Produktgas getrennt wird. Das Wasser fließt nun aufgrund seiner höheren Dichte wieder zurück in den Elektrolyseur. Dieser Naturumlauf kann bei Bedarf von Pumpen unterstützt werden.

Eine Elektrolyseeinheit umfasst typischerweise wenigstens vier Elektrolysemodule. Ein Elektrolysemodul umfasst typischerweise 50 Elektrolysezellen. Derzeit werden für jeweils zwei Elektrolysemodule ein Gasabscheider für das Produktgas Wasserstoff und ein Gasabscheider für das Produktgas Sauerstoff benötigt. Somit wird der Aufbau der Elektrolyseeinheit mit dem Naturumlauf schnell nachteilig aufwendig und komplex im Aufbau. Weiterhin ist der Betrieb nachteilig mit einer erhöhten Komplexität der Sicherheitsüberwachung und Wartung verbunden.

In der DE 102 58 525 A1 ist ein Druckelektrolyseur zur elektrochemischen Umsetzung von Wasser zu Wasserstoff und Sauerstoff offenbart. In einem Druckbehälter sind eine Anzahl von Elektrolysezellen in Form eines Stapels angeordnet. Außerhalb des Druckbehälters sind ein Sauerstoffabscheider und ein Wasserstoffabscheider symmetrisch angeordnet, wodurch gleiche Leitungswege für die entsprechenden Zuleitungen realisiert werden.

Aufgabe der Erfindung ist es daher, eine Elektrolyseeinheit und ein Verfahren zum Betreiben einer Elektrolyseeinheit, insbesondere mit Naturumlauf, anzugeben, welche einen vereinfachten und dennoch sicheren Betrieb der Elektrolyse bieten.

Die Aufgabe wird mit einer Elektrolyseeinheit gemäß Anspruch 1 und einem Verfahren zum Betreiben der Elektrolyseeinheit gemäß Anspruch 13 gelöst.

Die erfindungsgemäße Elektrolyseeinheit zum elektrochemischen Zerlegen von Wasser zu Wasserstoff und Sauerstoff umfasst wenigstens zwei Elektrolysemodule. Sie umfasst weiterhin genau eine erste Gasabscheidevorrichtung für ein erstes Produktgas umfassend Sauerstoff. Sie umfasst auch genau eine zweite Gasabscheidevorrichtung für ein zweites Produktgas umfassend Wasserstoff. Die erste Gasabscheidevorrichtung ist dabei mit jedem der wenigstens zwei Elektrolysemodule über jeweils eine erste Leitung verbunden und die zweite Gasabscheidevorrichtung ist mit jedem der Elektrolysemodule über jeweils eine zweite Leitung verbunden. Dabei weisen die wenigstens zwei ersten Leitungen dieselbe erste Länge auf und die wenigstens zwei zweite Leitungen weisen dieselbe zweite Länge auf. Weiterhin sind die erste Gasabscheidevorrichtung und die zweite Gasabscheidevorrichtung ineinander angeordnet. Dabei ist die erste oder die zweite Gasabscheidevorrichtung als eine äußere Hülle und ein Boden ausgestaltet und die andere zweite oder erste Gasabscheidevorrichtung als Rohr, welches in die Hülle ragt, ausgestaltet.

Das erfindungsgemäße Verfahren zum Betreiben einer Elektrolyseeinheit umfasst folgende Schritte. Zunächst wird eine Elektrolyseeinheit mit wenigstens zwei Elektrolysemodulen bereitgestellt, wobei in dem Elektrolysemodul Wasser zu Wasserstoff und Sauerstoff zerlegt wird. Weiterhin wird eine erste Gasabscheidevorrichtung für ein erstes Produktgas umfassend Sauerstoff bereitgestellt. Es wird auch eine zweite Gasabscheidevorrichtung für ein zweites Produktgas umfassend Wasserstoff bereitgestellt. Dabei ist die erste Gasabscheidevorrichtung mit jedem der wenigstens zwei Elektrolysemodule über jeweils eine erste Leitung verbunden. Die zweite Gasabscheidevorrichtung ist mit jedem der wenigstens zwei Elektrolysemodule über jeweils eine zweite Leitung verbunden. Dabei weisen die wenigstens zwei ersten Leitungen dieselbe erste Länge auf und die wenigstens zwei zweiten Leitungen dieselbe zweite Länge auf. Weiterhin sind die erste Gasabscheidevorrichtung und die zweite Gasabscheidevorrichtung ineinander angeordnet werden, wobei die erste oder die zweite Gasabscheidevorrichtung als eine äußere Hülle und ein Boden ausgestaltet ist und die andere zweite oder erste Gasabscheidevorrichtung als Rohr in die Hülle ragt.

Dadurch, dass die erste Länge der ersten Leitungen zwischen der ersten Gasabscheidevorrichtung und den Elektrolysemodulen gleich ist und auch die zweite Länge der zweiten Leitungen zwischen den zweiten Gasabscheidevorrichtung und Elektrolysemodulen gleich ist, vereinfacht sich der Aufbau der Elektrolyseeinheit. Die Teilegleichheit ermöglicht ebenso einfache Reparaturen bzw. ein einfaches Austauschen der Leitungen.

Weiterhin sind vorteilhaft auch bei dem Verwenden von drei oder mehr Elektrolysemodulen nur eine Gasabscheidevorrichtung pro Produktgas, insgesamt also zwei Gasabscheidevorrichtungen, nötig. Dies vereinfacht den Aufbau der Elektrolyseeinheit deutlich.

Weiterhin sind die Füllniveaus in den Gasabscheidevorrichtungen während des gesamten Betriebs konstant, da es nur diese beiden Gasabscheidevorrichtungen gibt und diese über die Leitungen mit derselben Länge konstant mit den Elektrolysemodulen verbunden sind. Das Beibehalten der Füllniveaus erhöht die Sicherheit der Elektrolyse, da ein Leerlaufen der Gasabscheider und ein damit einhergehendes Mischen der Produktgase Wasserstoff und Sauerstoff verhindert wird.

Die erste Gasabscheidevorrichtung und die zweite Gasabscheidevorrichtung sind ineinander angeordnet. Dabei ist die erste oder die zweite Gasabscheidevorrichtung als eine äußere Hülle und ein Boden ausgestaltet und die andere zweite oder erste Gasabscheidevorrichtung als Rohr, welches in die Hülle ragt ausgestaltet. In anderen Worten heißt das, dass eine der beiden Gasabscheidevorrichtungen als ein Gefäß mit der äußeren Hülle und dem Boden ausgestaltet ist. Die andere der beiden Gasabscheidevorrichtungen ist als ein Rohr, welches in dieses Gefäß hineinragt, ausgestaltet. In anderen Worten heißt das, dass das innenliegende Rohr eine der Gasabscheidevorrichtungen bildet und das äußere Gefäß mit dem innenliegenden Rohr einen Zwischenraum ausbildet, der die andere der Gasabscheidevorrichtungen bildet. Es gibt also eine äußere Gasabscheidevorrichtung, deren Umfang größer ist als der Umfang der anderen Gasabscheidevorrichtung, wobei die Gasabscheidevorrichtungen ineinander angeordnet sind. Es ist möglich, dass in der inneren Gasabscheidevorrichtung entweder Wasserstoff oder Sauerstoff abgetrennt wird.

Für einen sicheren Betrieb dieser Ausführung, muss das Niveau des Wassers in den Gasabscheidevorrichtungen in das innenliegende Rohr hineinragen. Nur so ist gewährleistet, dass die beiden Gasräume, welche Wasserstoff oder Sauerstoff umfassen, voneinander getrennt sind. In anderen Worten dient das Wasser als siphonartiges Schloss, um die beiden Seiten voneinander zu trennen.

Vorteilhaft ist es somit möglich, die beiden Gasabscheidevorrichtungen platzsparend ineinander anzuordnen. Weiterhin werden die beiden Gasabscheidevorrichtungen derart zwischen den Elektrolysemodulen angeordnet sein, dass die jeweils die erste Länge der ersten Leitung und die zweite Länge der zweiten Leitung gleich lang sind. Dadurch wird gewährleistet, dass die Füllhöhe in den integrierten Gasabscheidevorrichtungen nahezu konstant bleibt, da der Druckverlust in den Leitungen näherungsweise gleich ist. Auch die Stoffparameter und die entstehenden Stoffströme bleiben nahezu konstant. Somit ist ein effizienter und sicherer Betrieb der Anlage möglich.

In einer vorteilhaften Ausgestaltung und Weiterbildung der Erfindung umfasst ein Elektrolysemodul wenigstens zwei Elektrolysezellen, insbesondere 50 Elektrolysezellen, und jede Elektrolysezelle weist einen Anodenraum mit einer Anode und einen Kathodenraum mit einer Kathode auf. Dabei ist der Anodenraum vom Kathodenraum mittels einer Protonenaustausch-Membran getrennt. Der Anodenraum ist geeignet, Wasser aufzunehmen und an der Anode zu einem ersten Produkt umfassend Sauerstoff zu oxidieren. Der Kathodenraum ist geeignet, Wasser aufzunehmen und an der Kathode zu einem zweiten Produkt umfassend Wasserstoff zu reduzieren. Vorteilhaft erfolgt das Zerlegen des Wassers direkt aus deionisiertem Wasser mittels einer Protonenaustausch-Membran.

In einer weiteren vorteilhaften Ausgestaltung und Weiterbildung der Erfindung ist der Kathodenraum mit der zweiten Gasabscheidevorrichtung verbunden und der Anodenraum mit der ersten Gasabscheidevorrichtung verbunden. Vorteilhaft sind somit direkt die Räume, in denen die Produktgase entstehen, mit den Gasabscheidevorrichtungen verbunden. Dies vereinfacht den Aufbau vorteilhaft, da keine zusätzlichen Leitungen nötig sind.

In einer weiteren vorteilhaften Ausgestaltung und Weiterbildung der Erfindung weist das Rohr, das die innenliegende Gasabscheidevorrichtung umgibt, in Richtung des Bodens eine Verschlussfläche auf, wobei die Verschlussfläche als ein Gitter, als eine Lochplatte oder als ein Netz ausgestaltet ist. Vorteilhaft ermöglicht diese Ausgestaltung der Verschlussfläche, die Strömung zwischen der ersten und der zweiten Gasabscheidevorrichtung zu beeinflussen. Weiterhin stabilisiert der Einsatz der Verschlussfläche einen Querschnitt des Rohres vorteilhaft.

In einer weiteren vorteilhaften Ausgestaltung und Weiterbildung der Erfindung ist ein Querschnitt der Hülle und/oder ein Querschnitt des Rohres rund oder ein Vieleck. Besonders vorteilhaft entspricht die Anzahl der Ecken der Anzahl der Elektrolysemodule. Besonders vorteilhaft können auch eine ungerade Zahl von Elektrolysemodulen mit den Gasabscheidevorrichtungen verbunden werden. In anderen Worten kann die Anzahl der Elektrolysemodule, die mit einer Gasabscheidevorrichtung verbunden sind, frei gewählt werden.

In einer weiteren vorteilhaften Ausgestaltung und Weiterbildung der Erfindung ist die erste Gasabscheidevorrichtung mit einer ersten Druckabsicherungsvorrichtung verbunden und die zweite Gasabscheidevorrichtung mit einer zweiten Druckabsicherungsvorrichtung verbunden.

Vorteilhaft kann die Druckabsicherung an der abzusichernden Stelle wasserstoff- und/oder sauerstoffseitig angeordnet sein und muss nicht in einer angrenzenden Leitung untergebracht sein. Die Druckabsicherungsvorrichtung gewährleistet insbesondere, dass der entstehende Sauerstoff und der entstehende Wasserstoff aus den Gasabscheidern konstant entnommen werden, sodass der Pegelstand des Wassers, welches die beiden Gasräume voneinander trennt, sicher erhalten bleibt. Die Druckabsicherungsvorrichtungen gewährleisten somit vorteilhaft ein direktes Überprüfen der Sicherheit der Anlage, wodurch bereits zu einem frühen Zeitpunkt Maßnahmen ergriffen werden können, wenn der Druck sich verändert, um die Anlage sicher betreiben zu können.

Insbesondere der Gasraum in den Gasabscheidevorrichtungen kann mit seiner unteren Grenze oberhalb des Zulaufs der Leitungen aus der Gasabscheidevorrichtungen in das Elektrolysemodul, insbesondere den Wasserzulauf, angeordnet sein, um zu gewährleisten, dass in die Module nur Wasser zugeführt wird und kein Sauerstoff oder Wasserstoff durch Leitungen zurück in die Elektrolysemodule strömt. In anderen Worten heißt das, dass die Gasräume umfassend Wasserstoff oder Sauerstoff sicher voneinander getrennt sein sollten, um ein Vermischen der beiden Gase zu vermeiden.

In einer weiteren vorteilhaften Ausgestaltung und Weiterbildung der Erfindung ist zwischen der ersten und/oder zweiten Gasabscheidevorrichtung und den Elektrolysemodulen wenigstens eine Pumpe angeordnet. Diese Pumpe kann der Unterstützung oder Erhöhung des Naturumlaufs dienen. Insbesondere dann ist sie vorteilhaft im Einsatz, wenn der Druck in den Elektrolysemodulen in einem Bereich zwischen 1 bar und 5 bar liegt.

Es ist denkbar, nur genau eine Pumpe zwischen den Gasabscheidevorrichtungen und den Elektrolysemodulen anzuordnen, wenn die Gasabscheidevorrichtungen über eine Ringleitung miteinander verbunden sind und in der Ringleitung genau eine Pumpe angeordnet ist.

Alternativ ist denkbar, dass sowohl für die Sauerstoffseite als auch für die Wasserstoffseite für jedes Modul eine Pumpe eingesetzt wird, also zwei Pumpen pro Modul vorhanden sind. Diese Pumpen unterstützen den Naturumlauf. Es ist ebenso denkbar, dass nur genau eine Pumpe für die Wasserstoffseite und die Sauerstoffseite vorhanden ist, also eine Pumpe pro Modul vorhanden ist.

In einer weiteren vorteilhaften Ausgestaltung und Weiterbildung der Erfindung umfasst die Elektrolyseeinheit wenigstens drei Elektrolysemodule, wobei die Elektrolysemodule kreisförmig angeordnet sind und die erste und zweite Gasabscheider Vorrichtung zentral in der Mitte zwischen den Modulen angeordnet sind.

Vorteilhaft sind somit die Leitungen, welche die Gasabscheidevorrichtung mit den Elektrolysemodulen verbinden gleich lang. Durch diese Gleichheit der Teile, vereinfacht sich der Aufbau der Anlage. Vorteilhaft nimmt somit die Komplexität ab, wodurch auch die Kosten der Anlage sinken.

Weiterhin hat die Gleichheit der Leitungslängen zur Folge, dass alle Module auf der jeweiligen Gasseite, also der Sauerstoffseite oder der Wasserstoffseite, die gleichen Druckverhältnisse aufweisen. Somit verhalten sich die Elektrolysemodule gleich, was zum einen zu einer konstanten Sicherheit führt zum anderen eine gute Regelbarkeit der Elektrolysemodule untereinander ermöglicht. Durch die gleichen Druckverhältnisse auch auf der Wasserseite ergibt sich vorteilhaft eine gleichmäßige Versorgung mit Wasser damit bei Baugleichheit der Module eine zumindest sehr ähnliche Temperatur der einzelnen Module.

In einer weiteren vorteilhaften Ausgestaltung und Weiterbildung der Erfindung ist die erste oder zweite Gasabscheidevorrichtung mit genau einem Wärmetauscher zum Abkühlen des abgeschiedenen Wassers verbunden.

Vorteilhaft können die Umwälzpumpe für das Prozesswasser sowie die Rückkühlung des Prozesswassers für die einzelnen Elektrolysemodule voneinander getrennt werden. Dann wird lediglich ein zentraler Wärmetauscher benötigt. Weiterhin ist es nicht mehr nötig, den Wärmetauscher größer als nötig auszulegen, um einen geringeren Differenzdruck zu erhalten. Die Art des Wärmetauschers, in anderen Worten die Art der Kühlung, kann frei gewählt werden. Insbesondere sind Systeme mit Luft oder Wasser als Wärmeübertragungsmedium einsetzbar. Es ist aber auch möglich, im Wärmetauscher ein Wasser-Glykol-Gemisch als Wärmeübertragungsmedium einzusetzen. Die Auswahl der Kühlung erfolgt in Abhängigkeit der örtlichen Bedingungen.

Aufgrund der thermischen Masse des Wassers in den Gasabscheidevorrichtungen, welche zentral zwischen den Elektrolysemodulen angeordnet sind, kann die Temperaturregelung für die Prozesstemperatur vorteilhaft vereinfacht werden. Die Anzahl der Ventile im Kühlkreislauf kann reduziert werden, was die Kosten vorteilhaft senkt. Vorteilhaft ist lediglich eine Prozessregelungseinheit zur Regelung der Temperatur pro Wärmetauscher ausreichend.

In einer weiteren vorteilhaften Ausgestaltung und Weiterbildung der Erfindung umfasst die Elektrolyseeinheit genau eine Wasseraufbereitungsvorrichtung, die mit der ersten oder zweiten Gasabscheidevorrichtung verbunden ist. In anderen Worten heißt das, dass auch die Wasseraufbereitungsvorrichtung zentral erfolgen kann. Insbesondere kann das Prozesswasser durch den Wärmetauscher und die Wasseraufbereitungsvorrichtung mit derselben Pumpe gefördert werden. Vorteilhaft vereinfacht dies den Aufbau der Elektrolyseeinheit, wodurch Kosten gesenkt werden und die Wartungsanforderungen an die Elektrolyseeinheit sinken. Besonders vorteilhaft kann beim Verwenden einer Pumpe für die Wasseraufbereitungsvorrichtung und den Wärmetauscher die Temperatur für die Wasseraufbereitung so niedrig gewählt werden, dass Mischbettionenaustauscher eingesetzt werden können, welche bei diesen niedrigen Temperaturen abtrennen können. Typische Mischbettmaximaltemperaturen liegen in etwa bei 60°C.

In einer weiteren vorteilhaften Ausgestaltung und Weiterbildung der Erfindung umfasst das Elektrolysemodul an zwei gegenüberliegenden Seiten jeweils einem Modulendplatte, welche eine außen liegende Deckfläche aufweist. Dabei ist ein erstes Elektrolysemodul derart mit einem zweiten Elektrolysemodul elektrisch verbunden, dass eine Kontaktierungsvorrichtung eine Deckfläche des ersten Elektrolysemoduls und eine Deckfläche des zweiten Elektrolysemoduls berührt.

Für den Fall, dass wenigstens drei Elektrolysemodule miteinander verbunden sind, können die Kontaktierungsvorrichtungen besonders bevorzugt im Wechsel an gegenüberliegenden Seiten angeordnet werden. Das bedeutet, dass die Elektrolysemodule teilweise an beiden Deckflächen nahezu vollständig von der Kontaktierungsvorrichtung belegt sind.

Vorteilhaft ermöglicht dies eine vollflächige Kontaktierung der Module mittels der Modulendplatten. Dies ermöglicht eine gleichmäßige Stromgleichverteilung über das Elektrolysemodul. Vorteilhaft verlängert eine gleichmäßige Belastung der Elektrodeneinheit mit der Membran die Lebensdauer des Elektrolysemoduls und somit auch die Lebensdauer der Elektrolyseeinheit.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Elektrolyseeinheit nach dem Stand der Technik umfassend zwei Elektrolysezellen und miteinander verbundene erste Gasabscheidevorrichtungen;
- Figur 2: eine Elektrolysezelle mit Protonenaustauschmembran;
- Figur 3: eine Draufsicht einer Elektrolyseeinheit mit fünf Elektrolysemodulen und einer zentralen Gasabscheidevorrichtung;
- Figur 4: eine Schnittansicht einer Elektrolyseeinheit mit Elektrolysemodulen und einer zentralen Gasabscheidevorrichtung;
- Figur 5: eine Draufsicht einer Elektrolyseeinheit mit Elektrolysemodulen, einer zentralen Gasabscheidevorrichtung, einem Wärmetauscher und einer Wasseraufbereitungsvorrichtung;
- Figur 6: eine Elektrolyseeinheit mit einer zentralen Gasabscheidevorrichtung und flächig kontaktierten Elektrolysemodulen.

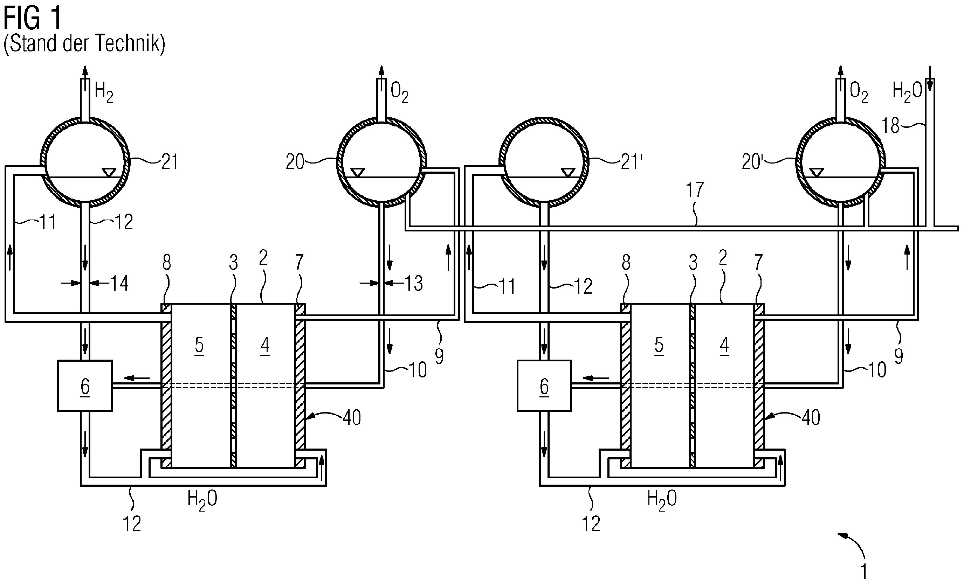

Figur 1 zeigt eine Elektrolyseeinheit 1 aus dem Stand der Technik mit zwei Elektrolysemodulen 40, wobei ein Elektrolysemodul mehrere, insbesondere fünfzig Elektrolysezellen 2, umfasst. Beide Elektrolysemodule 40 verfügen jeweils über eine sauerstoffseitige erste Gasabscheidevorrichtung 20 (20`) und über eine wasserstoffseitige zweite Gasabscheidevorrichtung 21 (21`). Die Rückführung des Wassers ist derart gestaltet, dass die zurückfließenden Wasserströme sich im Wärmetauscher vermischen und anschließend zurück zur Sauerstoffseite in die Elektrolysezelle geführt werden. Die sauerstoffseitigen Gasabscheidevorrichtungen 20 (20`) sind über eine siphonartige fünfte Leitung 17 miteinander verbunden. Weiterhin umfasst die fünfte Leitung 17 eine Zuführvorrichtung 18 für Frischwasser. In diesem Beispiel aus dem Stand der Technik handelt es sich um einen einseitigen Umwälzbetrieb auf der Sauerstoffseite.

Das Verbinden mehrerer Elektrolysezellen über die siphonartige fünfte Leitung 17 gewährleistet das Nachführen von Wasser, was das Absinken des Flüssigkeitsspiegels in den Gasabscheidevorrichtungen 20, 21 vermeidet. Im Stand der Technik sind also alle gleichartigen Gasabscheidevorrichtungen, jeweils die der Sauerstoffseite und Wasserstoffseite, über eine siphonartige Leitung miteinander verbunden, um die Pegelstände in den Gasabscheidevorrichtungen untereinander konstant zu halten und so die Sicherheit zu gewährleisten.

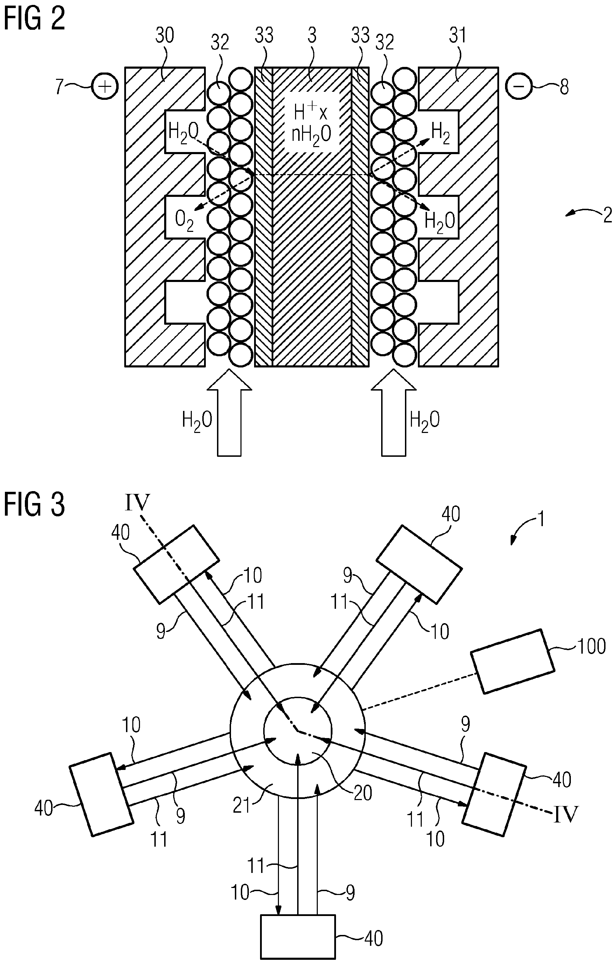

Figur 2 zeigt eine Elektrolysezelle 2 mit einer Protonenaustauschmembran 3. Die Elektrolysezelle 2 umfasst eine Anode 7 und eine Kathode 8. An die beiden Elektroden 7, 8 Grenzen jeweils Bipolarplatten 30, 31. Die Bipolarplatten grenzen jeweils an eine poröse Trägerstruktur 32. Durch diese Trägerstruktur 32 fließt das Edukt Wasser durch die Elektrolysezelle 2. Die poröse Trägerstruktur 32 grenzt wiederum an eine elektrokatalytische Schicht 33. Eine elektrokatalytische Schicht 33 ist im Anodenraum 4 angeordnet, eine elektrokatalytische Schicht 33 ist im Kathodenraum 5 angeordnet. Die elektrokatalytische Schicht 33 der Anodenseite umfasst typischerweise Iridium, die elektrokatalytische Schicht 33 der Kathodenseite umfasst typischerweise Platin. Zwischen diesen beiden katalytischen Schichten 33 befindet sich die Protonenaustauschmembran PEM 3. Diese umfasst insbesondere ein sulfoniertes Fluorpolymer, besonders bevorzugt umfassend Perfluorosulfonsäure. Ein Vorteil der PEM-Elektrolysezelle 2 liegt darin, dass als Edukt reines Wasser verwendet werden kann. Es werden als Trägerkomponenten also keine Lauge oder andere flüssige Komponenten für das Wasser verwendet.

Figur 3 zeigt eine Elektrolyseeinheit 1 mit fünf Elektrolysemodulen 40. Jedes Elektrolysemodul 40 umfasst typischerweise 50 Elektrolysezellen, wie in Figur 2 dargestellt. In der Mitte zwischen den Elektrolysemodulen 40 ist eine zentrale Gasabscheidevorrichtung angeordnet. Die zentrale Gasabscheidevorrichtung umfasst eine erste Gasabscheidevorrichtung 20 zum Abtrennen von Sauerstoff. Die zentrale Gasabscheidevorrichtung umfasst weiterhin eine zweite Gasabscheidevorrichtung 21 zum Abtrennen von Wasserstoff. Die erste Gasabscheidevorrichtung 20 ist innerhalb der zweiten Gasabscheidevorrichtung 21 angeordnet.

Die Elektrolysemodule 40 sind jeweils über eine erste Leitung 9 mit den zweiten Gasabscheidevorrichtungen 21 verbunden. Die erste Leitung 9 ist zweckmäßigerweise mit dem Kathodenraum verbunden, in dem der Wasserstoff entsteht. Durch die erste Leitung 9 wird ein Gemisch aus Wasser und Wasserstoff geführt. Dieses Gemisch wird anschließend in der zweiten Gasabscheidevorrichtung 21 voneinander getrennt. Die Elektrolysemodule 40 sind außerdem jeweils über eine dritte Leitung 11 mit der ersten Gasabscheidevorrichtung 20 verbunden. Über die dritte Leitung 11 wird demnach ein Gemisch aus Wasser und Sauerstoff transportiert. Zweckmäßigerweise ist also die dritte Leitung 11 mit dem Anodenraum 4 der Elektrolysezellen 2 direkt verbunden.

Weiterhin sind die Elektrolysemodule 40 jeweils über eine zweite Leitung 10 mit der zweiten Gasabscheidevorrichtung 21 verbunden. Durch die zweite Leitung 10 wird Wasser zurück in die Elektrolysemodule 40 geführt. Die zweite Leitung 10 kann sowohl mit der ersten Gasabscheidevorrichtung 20 als auch mit der zweiten Gasabscheidevorrichtung 21 verbunden sein.

Weiterhin umfasst die Elektrolyseeinheit 1 eine Vorrichtung zum Ausführen der Prozesstechnik 100. Die Prozesstechnik 100 umfasst insbesondere einen Wärmetauscher 50 zum Kühlen des Wassers.

Vorteilhaft sind in diesem Aufbau für alle Elektrolysemodule 40 nur jeweils eine erste und zweite Gasabscheidevorrichtung 20, 21 erforderlich, um alle Produktgase abzutrennen. Weiterhin ist es vorteilhaft sehr leicht möglich, die Anzahl der Elektrolysemodule 40 zu erhöhen. Insbesondere ist es auch möglich, eine ungerade Zahl von Elektrolysemodulen 40 mit der zentralen Gasabscheidevorrichtung zu verbinden und anschließend zu betreiben.

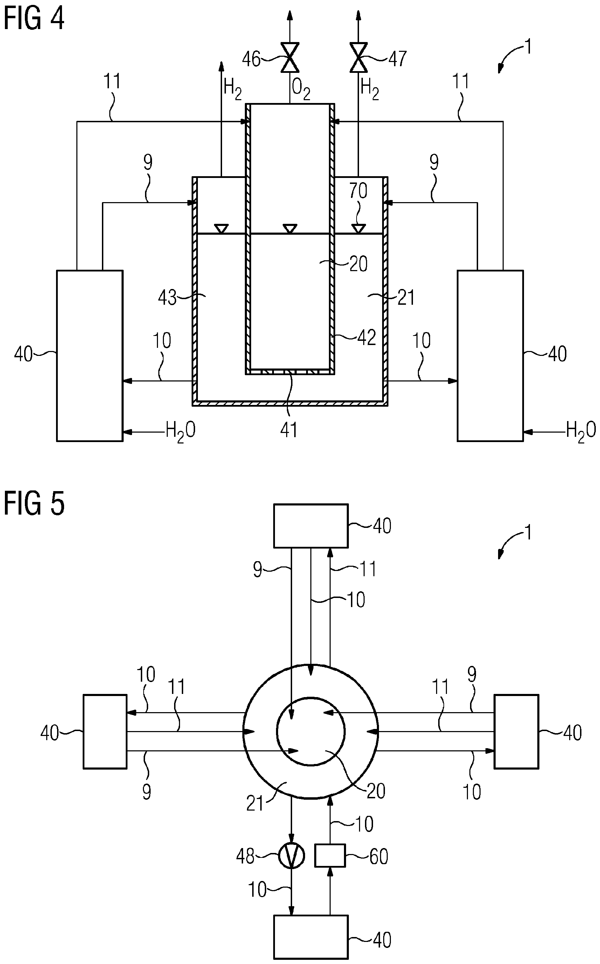

Ein weiterer Vorteil dieser Anordnung wird aus Figur 4 ersichtlich. Figur 4 zeigt einen Schnitt A-A` der Elektrolyseeinheit 1. Es ist dieselbe Elektrolyseeinheit 1 wie in Figur 3 abgebildet. Demnach befindet sich ebenfalls der zentrale Gasabscheider mit der ersten Gasabscheidevorrichtung 20 und der zweiten Gasabscheidevorrichtung 21 in der Mitte der Elektrolysemodule 40. In dieser Ansicht sind zwei der fünf Elektrolysemodule 40 zu sehen. Die zentrale Gasabscheidevorrichtung und die Elektrolysemodule 40 sind wiederum über jeweils eine erste Leitung 9, eine zweite Leitung 10 und eine dritte Leitung 11 miteinander verbunden. Die Leitungen sind in diesem Beispiel für jedes Elektrolysemodul 40 auf derselben Höhe angeordnet. Vorteilhaft sind somit alle Leitungen gleich lang. Durch diese Teilegleichheit lässt sich die Anlage kostengünstiger aufbauen.

In der zentralen Gasabscheidevorrichtung ist weiterhin die Pegelhöhe 70 des Wassers zu sehen. Weiterhin ist zu sehen, dass die erste Gasabscheidevorrichtung 20 über eine Abschlussfläche 41 verfügt. Diese Abschlussfläche 41 ist in diesem Beispiel als Gitter ausgestaltet. Es ist aber ebenso möglich, Netze oder offene Lochstrukturen oder eine komplette Öffnung über den Querschnitt der ersten Gasabscheidevorrichtung 20 einzusetzen.

Durch die offen ausgestaltete Abschlussfläche 41 der ersten Gasabscheidevorrichtung 20 kommunizieren die erste Gasabscheidevorrichtung 20 und die zweite Gasabscheidevorrichtung 21 miteinander. In anderen Worten heißt das, dass die Pegelhöhe 70 des Wassers in beiden Gasabscheidevorrichtungen 20, 21 nahezu gleich ist.

Weiterhin ist in Figur 4 zu sehen, dass die Pegelhöhe 70 des Wassers oberhalb der Oberkante der Elektrolysemodule 40 angeordnet ist. Dies ist insbesondere für den sicheren Betrieb der Elektrolyseeinheit 1 wichtig. Diese Pegelhöhe 70 gewährleistet, dass keine Produktgase über die zweite Leitung 10 in die Elektrolysemodule 40 zurückgeführt werden können. Weiterhin bildet das Wasser durch die Pegelhöhe 70 ein Schloss zwischen dem wasserstoffhaltigen, in diesem Beispiel ringförmig ausgebildeten, Gasraum der zweiten Gasabscheidevorrichtung 21 und dem, in diesem Beispiel runden, sauerstoffhaltigen Gasraum. Das Wasser verhindert also über eine siphonartige Kommunikation zwischen den beiden Gasabscheidevorrichtungen, dass der Wasserstoff und der Sauerstoff miteinander vermischt werden oder gar eine Knallgasreaktion stattfinden kann.

Besonders vorteilhaft ist der Gasraum für den Wasserstoff doppelt so groß im Volumen wie der Gasraum für den Sauerstoff.

Weiterhin sind direkt an den Auslässen für Sauerstoff und Wasserstoff ein erstes Sicherheitsventil 46 und ein zweites Sicherheitsventil 47 angeordnet. Vorteilhaft ist es so möglich, die Druckabsicherung direkt an den abzusichernden Stellen der Sauerstoffseite und Wasserstoffseite anzuordnen.

Vorteilhaft wird mit diesem Aufbau der zentralen Gasabscheidevorrichtungen ein Pegelausgleich für alle Elektrolysemodule 40 erzielt. Es sind keine komplexen Anordnungen von Leitungen für jedes Elektrolysemodul 40 notwendig. Dies vereinfacht den Aufbau der Elektrolyseeinheit 1 vorteilhaft.

Auch die Gasprobenentnahme kann zentral in einer der beiden Gasabscheidevorrichtungen 20, 21 erfolgen und dann zentral gekühlt und analysiert werden. Dies vereinfacht den Aufbau der Elektrolyseeinheit 1 weiter. Eine Gasprobenentnahme ist in den Figuren nicht gezeigt.

Figur 5 zeigt eine Elektrolyseeinheit mit mehreren Elektrolysemodulen 40. In der Figur sind 3 Elektrolysemodule 40 gezeigt, es können aber ebenso wenigstens 4, 5 oder 6 Elektrolysemodule um die zentrale Gasabscheidevorrichtung angeordnet sein. In diesem Ausführungsbeispiel ist die zweite Gasabscheidevorrichtung 21 in der Mitte der ersten Gasabscheidevorrichtung 20 angeordnet. In andern Worten heißt das, dass hier die erste Gasabscheidevorrichtung 20 außen angeordnet ist. Wie bereits in den anderen Ausführungsbeispielen sind die Elektrolysemodule 40 jeweils über eine erste Leitung 9, eine zweite Leitung 10 und eine dritte Leitung 11 mit der zentralen Gasabscheidevorrichtung verbunden. Figur 5 zeigt weiterhin einen Wärmetauscher 50 und eine Wasseraufbereitungsvorrichtung 60. Der Wärmetauscher 50 ist über eine Pumpe und eine zweite Leitung 10 mit der ersten Gasabscheidevorrichtung 20 verbunden. Da die erste Gasabscheidevorrichtung 20 kommunizierend mit der zweiten Gasabscheidevorrichtung 21 verbunden ist, wird somit über diese zweite Leitung 10 das Wasser beider Gasabscheidevorrichtungen in den Wärmetauscher 50 transportiert. Vorteilhaft wird somit nur ein Wärmetauscher 50 für die gesamte Elektrolyseeinheit 1 benötigt. Die Art der der Kühlung in dem Wärmetauscher 50 ist dabei frei wählbar. Sie kann also mittels Luft oder Wasser erfolgen. Es ist ebenso denkbar, in Abhängigkeit der Gegebenheiten des Aufstellorts, einen Zwischenkühlkreislauf für ein Wasser - Glykol - Gemisch mit dem Wärmetauscher 50 zu betreiben.

Zum Wasseraustausch in der Wasseraufbereitungsvorrichtung 60 ist in diesem Beispiel vorteilhaft nur eine zentrale Pumpe 48 nötig. Diese kann individuell an die Anlagenbedingungen angepasst werden. Es ist denkbar, in dieser Figur aber nicht gezeigt, die erste und zweite Gasabscheidevorrichtungen 20, 21 auf einem zentralen Traggestell zu platzieren. Dadurch ist es vorteilhaft möglich, unterhalb der zentralen Gasabscheidevorrichtung ein Kühlkreislaufanschluss anzuordnen. Dadurch ist die eine Pumpe 48 der Elektrolyseeinheit 1 gut zugänglich.

Besonders vorteilhaft ist, dass die gesamte zu kühlende thermische Masse, insbesondere das Wasser, zentral zwischen den Elektrolysemodulen 40 angeordnet ist. Dadurch kann eine Temperaturregelung der Prozesstemperatur vorteilhaft im Vergleich zum Stand der Technik vereinfacht werden. Insbesondere können Ventile im Kühlkreislauf eingespart werden, was vorteilhaft zu einer Kostenersparnis führt.

Im Anschluss an den Wärmetauscher wird das Wasser in eine Wasseraufbereitungsvorrichtung 60 geführt. Auch die Wasseraufbereitungsvorrichtung erfolgt zentral. Vorteilhaft ist somit nur eine Vorrichtung zur Wasseraufbereitung notwendig. In diese Wasseraufbereitungsvorrichtung 60 kann vorteilhaft Wasser mit derselben Pumpe 48 gefördert werden wie in den Wärmetauscher 50. Weiterhin ist die zentrale Anordnung der Wasseraufbereitungsvorrichtung 60 vorteilhaft, da die Ionentauscher, die in der Wasseraufbereitungsvorrichtung 60 vorhanden sind, leicht zugänglich sind. Besonders vorteilhaft ist auch dass die Wasseraufbereitungsvorrichtung mit einer geringen Temperatur betrieben werden kann und somit die Ionentauscher vorteilhaft eine längere Betriebszeit als im Stand der Technik aufweisen können.

In Abhängigkeit des Prozessdrucks der Elektrolyseeinheit 1 ist es ebenso möglich, eine zweite Pumpe zum Fördern des Wassers durch die Wasseraufbereitungsvorrichtung 60 vorzusehen.

In allen gezeigten Ausführungsbeispielen der Figuren 3 bis 5 kann zwischen den Elektrolysemodulen 40 und der zentralen Gasabscheidevorrichtung ein Gitterrost angeordnet sein. Dies ermöglicht die leichte Zugänglichkeit der Vorrichtungen für Servicekräfte.

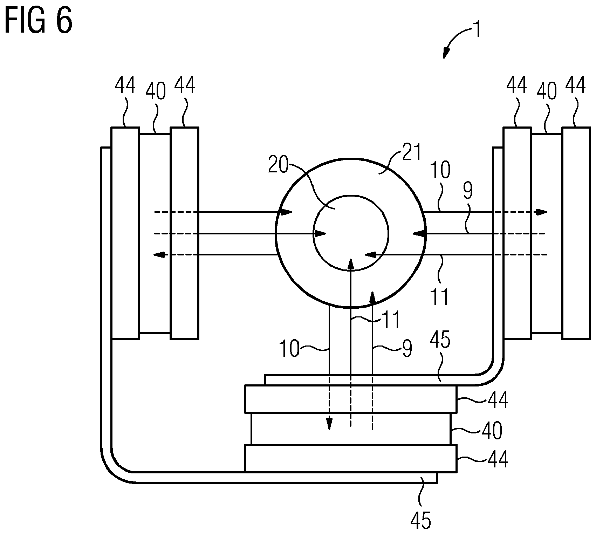

Die zentrale Aufstellung der Gasabscheidevorrichtungen 20, 21 in der Mitte der Elektrolysemodule 40 um die Gasabscheidevorrichtung ermöglicht eine vorteilhafte Kontaktierung der Elektrolysemodule 40 untereinander. Diese Kontaktierung zeigt Figur 6. Wie bereits in den anderen Beispielen gezeigt, ist in der Mitte der Elektrolyseeinheit 1 eine erste Gasabscheidevorrichtung 20 und eine diese erste Gasabscheidevorrichtung 20 umgebende zweite Gasabscheidevorrichtung 21 angeordnet. Diese zentrale Gasabscheidevorrichtung ist umgeben von drei Elektrolysemodulen 40. Es ist ebenso eine größere Menge Elektrolysemodule 40 denkbar, welche die zentrale Gasabscheidevorrichtung umgeben.

Die Elektrolysemodule 40 weisen jeweils eine Modulendplatte 44 an ihren beiden Endflächen auf. Diese Modulendplatte Platten 44 sind von Elektrolysemodul 40 zu Elektrolysemodul 40 über Kontaktplatten 45 miteinander elektrisch verbunden. Die Kontaktplatten 45 können vorteilhaft über die gesamte Fläche der Modulendplatte 44 oder zumindest weite Teile der Modulendplatte 44 angeordnet werden. Vorteilhaft erhöht dies die Stromgleichverteilung zwischen den Elektrolysemodulen 40. Eine gleichmäßige Stromgleichverteilung über die Elektrolysemodule 40 erhöht die Lebensdauer der einzelnen Elektrolysezellen 2 mit der Protonenaustauschmembran 3 vorteilhaft.

### Bezugszeichenliste

- 1: Elektrolyseeinheit
- 2: Elektrolysezelle
- 3: Protonenaustauschmembran
- 4: Anodenraum
- 5: Kathodenraum
- 6: Wärmetauscher
- 7: Anode
- 8: Kathode
- 9: erste Leitung
- 10: zweite Leitung
- 11: dritte Leitung
- 12: vierte Leitung
- 13: erster Durchmesser
- 14: zweiter Durchmesser
- 15: zweite Steigleitung
- 16: Verbindungsleitung
- 17: fünfte Leitung
- 18: Zuführvorrichtung für Wasser
- 20: erste Gasabscheidevorrichtung
- 21: zweite Gasabscheidevorrichtung
- 30: Bipolarplatte der Anode
- 31: Bipolarplatte der Kathode
- 32: poröse Trägerstruktur
- 33: elektrokatalytische Schicht
- 40: Elektrolysemodul
- 41: Abschlussfläche
- 42: Hülle
- 43: Zwischenraum
- 44: Modulendplatte
- 45: Kontaktplatten
- 46: erstes Sicherheitsventil
- 47: zweites Sicherheitsventil
- 48: Pumpe
- 50: Wärmetauscher
- 60: Wasseraufbereitungsvorrichtung
- 70: Pegelhöhe
- 100: Prozesstechnik
- H₂O: Wasser
- H₂: Wasserstoff
- O₂: Sauerstoff

## Patentansprüche

1. Elektrolyseeinheit (1) zum elektrochemischen Zerlegen von Wasser (H₂O) zu Wasserstoff (H₂) und Sauerstoff (O₂)
- mit wenigstens zwei Elektrolysemodulen (40),
- mit genau einer ersten Gasabscheidevorrichtung (20) für ein erstes Produktgas umfassend Sauerstoff,
- mit genau einer zweiten Gasabscheidevorrichtung (21) für ein zweites Produktgas umfassend Wasserstoff,
wobei die erste Gasabscheidevorrichtung (20) mit jedem der wenigstens zwei Elektrolysemodule (40) über jeweils eine erste Leitung (9) verbunden ist und die zweite Gasabscheidevorrichtung (21) mit jedem der Elektrolysemodule (40) über jeweils eine zweite Leitung (10) verbunden ist, wobei die wenigstens zwei erste Leitungen (9) dieselbe erste Länge und die wenigstens zwei zweite Leitungen (10) dieselbe zweite Länge aufweisen, und wobei die erste Gasabscheidevorrichtung (20) und die zweite Gasabscheidevorrichtung (21) ineinander angeordnet sind, wobei die erste oder die zweite Gasabscheidevorrichtung (20, 21) als eine äußere Hülle und ein Boden ausgestaltet ist und die andere zweite oder erste Gasabscheidevorrichtung (21, 20) als Rohr in die Hülle ragt.

2. Elektrolyseeinheit (1) nach Anspruch 1, wobei ein Elektrolysemodul (40) der wenigstens zwei Elektrolysemodule (40) wenigstens zwei Elektrolysezellen (2) umfasst und jede Elektrolysezelle (2) einen Anodenraum (4) mit einer Anode (7) und einen Kathodenraum (5) mit einer Kathode (8) umfasst, wobei der Anodenraum (4) vom Kathodenraum (5) mittels einer Protonenaustausch-Membran (3) getrennt ist, und der Anodenraum (4) geeignet ist, Wasser (H₂O) aufzunehmen und an der Anode (7) zu einem ersten Produkt umfassend Sauerstoff (O₂) zu oxidieren und der Kathodenraum (5) geeignet ist, Wasser (H₂O) aufzunehmen und an der Kathode (8) zu einem zweiten Produkt umfassend Wasserstoff (H₂) zu reduzieren.

3. Elektrolyseeinheit (1) nach Anspruch 2, wobei der Kathodenraum (5) mit der zweiten Gasabscheidevorrichtung (21) verbunden ist und der Anodenraum (4) mit der ersten Gasabscheidevorrichtung (20) verbunden ist.

4. Elektrolyseeinheit (1) nach einem der vorhergehenden Ansprüche, wobei das Rohr in Richtung des Bodens eine Verschlussfläche (41) aufweist, wobei die Verschlussfläche (41) als ein Gitter, als eine Lochplatte oder als ein Netz ausgestaltet ist.

5. Elektrolyseeinheit (1) nach einem der vorhergehenden Ansprüche, wobei ein Querschnitt der Hülle und/oder des Rohres rund ist oder ein Vieleck ist.

6. Elektrolyseeinheit (1) nach einem der vorhergehenden Ansprüche, wobei die erste Gasabscheidevorrichtung (20) mit einer ersten Druckabsicherungsvorrichtung (46) verbunden ist und die zweite Gasabscheidevorrichtung (21) mit einer zweiten Druckabsicherungsvorrichtung (47) verbunden ist.

7. Elektrolyseeinheit (1) nach einem der vorhergehenden Ansprüche, wobei zwischen der ersten und/oder zweiten Gasabscheidevorrichtung (20, 21) und den Elektrolysemodulen (40) wenigstens eine Pumpe (48) angeordnet ist.

8. Elektrolyseeinheit (1) nach einem der vorhergehenden Ansprüche mit wenigstens drei Elektrolysemodulen (40), wobei die Elektrolysemodule (40) kreisförmig angeordnet sind und die erste und zweite Gasabscheidevorrichtung (20, 21) zentral in der Mitte zwischen den Modulen angeordnet sind.

9. Elektrolyseeinheit (1) nach einem der vorhergehenden Ansprüche, wobei die erste und/oder zweite Gasabscheidevorrichtung (20, 21) mit genau einem Wärmetauscher (50) zum Abkühlen des abgeschiedenen Wassers (H₂O) verbunden ist.

10. Elektrolyseeinheit (1) nach einem der vorhergehenden Ansprüche, wobei die erste oder zweite Gasabscheidevorrichtung (20, 21) mit genau einer Wasseraufbereitungsvorrichtung (60) verbunden ist.

11. Elektrolyseeinheit (1) nach Anspruch 10, wobei die Wasseraufbereitungsvorrichtung (60) eine Pumpe, eine Kühlvorrichtung und eine Ionentauschvorrichtung umfasst.

12. Elektrolyseeinheit (1) nach einem der vorhergehenden Ansprüche, wobei das Elektrolysemodul (40) an zwei gegenüberliegenden Seiten jeweils eine Modulendplatte (44) umfasst, welche eine außenliegende Deckfläche aufweist, wobei ein erstes Elektrolysemodul (40) derart mit einem zweiten Elektrolysemodul (40) elektrisch verbunden ist, dass eine Kontaktierungsvorrichtung (45) eine Deckfläche des ersten Elektrolysemoduls und eine Deckfläche des zweiten Elektrolysemoduls zu großen Teilen berührt.

13. Verfahren zum Betreiben einer Elektrolyseeinheit (1) mit folgenden Schritten:
- Bereitstellen einer Elektrolyseeinheit (1) mit wenigstens zwei Elektrolysemodulen (40), wobei in dem Elektrolysemodul (40) Wasser (H₂O) zu Wasserstoff (H₂) und Sauerstoff (O₂) zerlegt wird,
- Bereitstellen einer ersten Gasabscheidevorrichtung (20) für ein erstes Produktgas umfassend Sauerstoff,
- Bereitstellen einer zweiten Gasabscheidevorrichtung (21) für ein zweites Produktgas umfassend Wasserstoff,
wobei die erste Gasabscheidevorrichtung (20) mit jedem der wenigstens zwei Elektrolysemodule (40) über jeweils eine erste Leitung (9) verbunden werden und die zweite Gasabscheidevorrichtung (21) mit jedem der Elektrolysemodule (40) über jeweils eine zweite Leitung (10) verbunden werden, wobei die wenigstens zwei erste Leitungen (9) dieselbe erste Länge und die wenigstens zwei zweite Leitungen (10) dieselbe zweite Länge aufweisen, und wobei die erste Gasabscheidevorrichtung (20) und die zweite Gasabscheidevorrichtung (21) ineinander angeordnet werden, wobei die erste oder die zweite Gasabscheidevor-richtung (20, 21) als eine äußere Hülle und ein Boden aus-gestaltet ist und die andere zweite oder erste Gasabscheidevorrichtung (21, 20) als Rohr in die Hülle ragt.

14. Verfahren nach Anspruch 13, wobei die Elektrolyseeinheit bei einem Druck in einem Bereich von 1 bar bis 5 bar betrieben wird.

## Claims

1. Electrolysis unit (1) for the electrochemical dissociation of water (H₂O) into hydrogen (H₂) and oxygen (O₂)
- comprising at least two electrolysis modules (40);
- comprising exactly one first gas separation device (20) for a first product gas comprising oxygen,
- comprising exactly one second gas separation device (21) for a second product gas comprising hydrogen,
wherein the first gas separation device (20) is connected to each of the at least two electrolysis modules (40) by means of a first conduit (9) in each case and the second gas separation device (21) is connected to each of the electrolysis modules (40) by means of a second conduit (10) in each case and the at least two first conduits (9) have the same first length and the at least two second conduits (10) have the same second length, wherein the first gas separation device (20) and the second gas separation device (21) are arranged inside one another, with the first or the second gas separation device (20, 21) being configured as an outer shell and a bottom and the other second or first gas separation device (21, 20) projecting as tube into the shell.

2. Electrolysis unit (1) according to Claim 1, wherein an electrolysis module (40) of the at least two electrolysis modules (40) comprises at least two electrolysis cells (2) and each electrolysis cell (2) comprises an anode space (4) having an anode (7) and a cathode space (5) having a cathode (8) and the anode space (4) is separated from the cathode space (5) by means of a proton exchange membrane (3) and the anode space (4) is suitable for taking up water (H₂O) and oxidizing it at the anode (7) to give a first product comprising oxygen (O₂) and the cathode space (5) is suitable for taking up water (H₂O) and reducing it at the cathode (8) to give a second product comprising hydrogen (H₂).

3. Electrolysis unit (1) according to Claim 2, wherein the cathode space (5) is connected to the second gas separation device (21) and the anode space (4) is connected to the first gas separation device (20).

4. Electrolysis unit (1) according to any of the preceding claims, wherein the tube has a closing face (41) in the direction of the bottom and the closing face (41) is configured as a grid, as a perforated plate or as a mesh.

5. Electrolysis unit (1) according to any of the preceding claims, wherein a cross section of the shell and/or of the tube is round or is a polygon.

6. Electrolysis unit (1) according to any of the preceding claims, wherein the first gas separation device (20) is connected to a first pressure maintenance device (46) and the second gas separation device (21) is connected to a second pressure maintenance device (47).

7. Electrolysis unit (1) according to any of the preceding claims, wherein at least one pump (48) is arranged between the first and/or second gas separation device (20, 21) and the electrolysis modules (40).

8. Electrolysis unit (1) according to any of the preceding claims having at least three electrolysis modules (40), wherein the electrolysis modules (40) are arranged in a circle and the first and second gas separation devices (20, 21) are arranged centrally in the middle between the modules.

9. Electrolysis unit (1) according to any of the preceding claims, wherein the first and/or second gas separation device (20, 21) is connected to exactly one heat exchanger (50) for cooling the water (H₂O) which has been separated off.

10. Electrolysis unit (1) according to any of the preceding claims, wherein the first or second gas separation device (20, 21) is connected to exactly one water treatment device (60).

11. Electrolysis unit (1) according to Claim 10, wherein the water treatment device (60) comprises a pump, a cooling device and an ion exchange device.

12. Electrolysis unit (1) according to any of the preceding claims, wherein the electrolysis module (40) comprises a module end plate (44), which has an exterior covering surface, on each of two opposite sides and a first electrolysis module (40) is electrically connected to a second electrolysis module (40) in such a way that a contacting device (45) contacts a covering surface of the first electrolysis module and a covering surface of the second electrolysis module to a large extent.

13. Method for operating an electrolysis unit (1) comprising the following steps:
- provision of an electrolysis unit (1) comprising at least two electrolysis modules (40), with water (H₂O) being dissociated into hydrogen (H₂) and oxygen (O₂) in the electrolysis module (40),
- provision of a first gas separation device (20) for a first product gas comprising oxygen,
- provision of a second gas separation device (21) for a second product gas comprising hydrogen,
wherein the first gas separation device (20) is connected to each of the at least two electrolysis modules (40) by means of a first conduit (9) in each case and the second gas separation device (21) is connected to each of the electrolysis modules (40) by means of a second conduit (10) in each case and the at least two first conduits (9) have the same first length and the at least two second conduits (10) have the same second length, wherein the first gas separation device (20) and the second gas separation device (21) are arranged inside one another, with the first or the second gas separation device (20, 21) being configured as an outer shell and a bottom and the other second or first gas separation device (21, 20) projecting as tube into the shell.

14. Method according to Claim 13, wherein the electrolysis unit is operated at a pressure in the range from 1 bar to 5 bar.

## Revendications

1. Groupe (1) d'électrolyse pour la décomposition électrochimique de l'eau (H₂O) en hydrogène (H₂) et en oxygène (O₂)
- comprenant au moins deux modules (40) d'électrolyse,
- comprenant exactement un premier dispositif (20) de séparation de gaz pour un premier gaz produit comprenant de l'oxygène,
- comprenant exactement un deuxième dispositif (21) de séparation de gaz pour un deuxième gaz produit comprenant de l'hydrogène,
dans lequel le premier dispositif (20) de séparation de gaz communique avec chacun des au moins deux modules (40) d'électrolyse par respectivement un premier conduit (9) et le deuxième dispositif (21) de séparation de gaz communique avec chacun des modules (40) d'électrolyse par respectivement un deuxième conduit (10), dans lequel les au moins deux premiers conduits (9) ont la même première longueur et les au moins deux deuxièmes conduits (10) ont la même deuxième longueur et dans lequel le premier dispositif (20) de séparation de gaz et le deuxième dispositif (21) de séparation de gaz sont disposés l'un dans l'autre, dans lequel le premier ou le deuxième dispositif (20, 21) de séparation de gaz est conformé sous la forme d'une enveloppe extérieure et d'un fonds et l'autre deuxième ou premier dispositif (21, 20) de séparation de gaz pénètre sous la forme d'un tuyau dans l'enveloppe.

2. Groupe (1) d'électrolyse suivant la revendication 1, dans lequel un module (40) d'électrolyse parmi les au moins deux modules (40) d'électrolyse comprend au moins deux cellules (2) d'électrolyse et chaque cellule (2) d'électrolyse a un compartiment (4) anodique ayant une anode (7) et un compartiment (5) cathodique ayant une cathode (8), dans lequel le compartiment (4) anodique est séparé du compartiment (5) cathodique au moyen d'une membrane (3) d'échange de protons et le compartiment (4) anodique est propre à recevoir de l'hydrogène (H₂O) et à l'oxyder à l'anode (7) en un premier produit comprenant de l'oxygène (O₂) et le compartiment (5) cathodique est propre à recevoir de l'eau (H₂O) et à la réduire à la cathode (8) en un deuxième produit comprenant de l'hydrogène (H₂) .

3. Groupe (1) d'électrolyse suivant la revendication 2, dans lequel le compartiment (5) cathodique communique avec le deuxième dispositif (21) de séparation de gaz et le compartiment (4) anodique communique avec le premier dispositif (20) de séparation de gaz.

4. Groupe (1) d'électrolyse suivant l'une des revendications précédentes, dans lequel le tuyau a, dans la direction du fond, une surface (41) de fermeture, dans lequel la surface (41) de fermeture est conformée en grille, en plaque à trous ou en réseau.

5. Groupe (1) d'électrolyse suivant l'une des revendications précédentes, dans lequel une section transversale de l'enveloppe et/ou du tuyau est circulaire ou polygonale.

6. Groupe (1) d'électrolyse suivant l'une des revendications précédentes, dans lequel le premier dispositif (20) de séparation de gaz communique avec un premier dispositif (46) de protection vis-à-vis de la pression et le deuxième dispositif (21) de séparation de gaz communique avec un deuxième dispositif (47) de protection vis-à-vis de la pression.

7. Groupe (1) d'électrolyse suivant l'une des revendications précédentes, dans lequel au moins une pompe (48) est montée entre le premier et/ou le deuxième dispositif (20, 21) de séparation de gaz et les modules (40) d'électrolyse.

8. Groupe (1) d'électrolyse suivant l'une des revendications précédentes, comprenant au moins trois modules (40) d'électrolyse, dans lequel les modules (40) d'électrolyse sont disposés suivant un cercle et le premier et le deuxième dispositifs (20, 21) de séparation de gaz sont disposés centralement au milieu entre les modules.

9. Groupe (1) d'électrolyse suivant l'une des revendications précédentes, dans lequel le premier et/ou le deuxième dispositif (20, 21) de séparation de gaz communique avec exactement un échangeur de chaleur (50) pour le refroidissement de l'eau (H₂O) séparée.

10. Groupe (1) d'électrolyse suivant l'une des revendications précédentes, dans lequel le premier ou le deuxième dispositif (20, 21) de séparation de gaz communique avec exactement un dispositif (60) de traitement de l'eau.

11. Groupe (1) d'électrolyse suivant la revendication 10, dans lequel le dispositif (60) de traitement de l'eau comprend une pompe, un dispositif de refroidissement et un dispositif à échange d'ion.

12. Groupe (1) d'électrolyse suivant l'une des revendications précédentes, dans lequel le module (40) d'électrolyse comprend sur deux côtés opposés respectivement une plaque (44) de module, qui a une surface de recouvrement vers l'extérieur, dans lequel un premier module (40) d'électrolyse est relié électrique à un deuxième module (40) d'électrolyse de façon à ce qu'un dispositif (45) de mise en contact touche en grande partie une surface de recouvrement du premier module d'électrolyse et une surface de recouvrement du deuxième module d'électrolyse.

13. Procédé pour faire fonctionner un groupe (1) d'électrolyse comprenant les stades suivants :
- on se procure un groupe (1) d'électrolyse ayant au moins deux modules (40) d'électrolyse, dans lequel on décompose dans le module (40) d'électrolyse de l'eau (H₂O) en hydrogène (H₂) et en oxygène (O₂),
- on se procure un premier dispositif (20) de séparation de gaz pour un premier gaz produit comprenant de l'oxygène,
- on se procure un deuxième dispositif (21) de séparatif de gaz pour un deuxième gaz produit comprenant de l'hydrogène,
dans lequel on met en communication le premier dispositif (20) de séparation de gaz avec chacun des au moins deux modules (40) d'électrolyse par respectivement un premier conduit (9) et on met en communication le deuxième dispositif (21) de séparation de gaz avec chacun des modules (40) d'électrolyse par respectivement un deuxième conduit (10), dans lequel les au moins deux premiers conduits (9) ont la même première longueur et les au moins deux deuxièmes conduits (10) ont la même deuxième longueur et dans lequel on met le premier dispositif (20) de séparation de gaz et le deuxième dispositif (21) de séparation de gaz l'un dans l'autre, dans lequel le premier ou le deuxième dispositif (20, 21) de séparation de gaz est conformé sous la forme d'une enveloppe extérieure et d'un fond et l'autre deuxième ou premier dispositif (21, 20) de séparation de gaz pénètre sous la forme d'un tuyau dans l'enveloppe.

14. Procédé suivant la revendication 13, dans lequel on fait fonctionner le groupe d'électrolyse sous une pression dans une plage de 1 bar à 5 bar.
